# EUROPÄISCHE PATENTSCHRIFT

(11) **EP 1 068 012 B1**
(45) Veröffentlichungstag und Bekanntmachung des Hinweises auf die Patenterteilung: **19.05.2004**
(21) Anmeldenummer: 99919143.0
(22) Anmeldetag: 26.03.1999
(51) Int. Cl.: B01J 37/02, B01D 53/86, F01N 3/28

(54) **KATALYTISCH WIRKSAME STRUKTUR**
CATALYTICALLY ACTIVE STRUCTURE
STRUCTURE A EFFET CATALYTIQUE

(30) Priorität: 07.04.1998 DE 19815608
(43) Veröffentlichungstag der Anmeldung: 17.01.2001
(73) Patentinhaber: Emitec Gesellschaft für Emissionstechnologie mbH, 53797 Lohmar (DE)
(72) Erfinder: BERGMANN, Andrée, D-53797 Lohmar (DE)
(74) Vertreter: Kahlhöfer, Hermann, Dipl.-Phys.
(86) Internationale Anmeldenummer: PCT/EP1999/002066
(87) Internationale Veröffentlichungsnummer: WO 1999/051346

(56) Entgegenhaltungen:
- WO-A-99/10081
- DE-A- 19 536 752
- DE-C- 4 416 469
- US-A- 5 234 882
- DATABASE WPI Section Ch, Week 9331 Derwent Publications Ltd., London, GB; Class E36, AN 93-247767 XP002111832 & JP 05 168935 A (SUMITOMO METAL IND LTD), 2. Juli 1993 (1993-07-02)
- MANFRED NONNENMANN: "Metallträger für Abgaskatalysatoren in Kraftfahrzeugen" MTZ MOTORTECHNISCHE ZEITSCHRIFT, Bd. 45, Nr. 12, 1984, Seiten 493-499, XP002111831 DE in der Anmeldung erwähnt

## Beschreibung

Der Gegenstand der Erfindung bezieht sich auf eine von einem Abgas einer Verbrennungskraftmaschine durchströmbare, katalytisch wirksame Struktur, insbesondere eine Wabenstruktur, die durch wenigstens eine Blechlage gebildet ist, welche eine katalytisch wirksame Oberfläche aufweist.

Zur Verringerung von Schadstoffkomponenten, wie z. B. unverbrandten Kohlenwasserstoffen, Kohlenmonoxid und Stickoxiden, werden Strukturen, insbesondere wabenförmige Strukturen, verwendet, die eine katalytisch wirksame Oberfläche aufweisen. Die Struktur kann durch einen monolytischen, keramischen Wabenkörper gebildet sein. Es sind auch Strukturen bekannt, die durch gewickelte und/oder geschichtete Blechlagen gebildet sind. Die metallischen Strukturen sind mit einer dünnen Schicht aus Aluminiumoxid (Wash-coat) überzogen. Das Ahiminiumoxid vergrößert die Oberfläche der Struktur. Über die Aluminiumoxidschicht ist ein katalytisch wirksamer Werkstoff verteilt. Der Werkstoff enthält Platin, Rhodium und Palladium.

Um eine optimale Funktion des Abgaskatalysators zu erreichen, ist eine genaue Kontrolle des Kraftstoff-Luft-Gemisches im Abgas notwendig. Hierzu wird in einen Abgasstrang eine Lambda-Sonde in Strömungsrichtung des Abgases betrachtet vor dem Abgaskatalysator angeordnet. Die Lambda-Sonde ist mit meiner Steuerung der Verbrennungskraftmaschine verbunden, durch die eine Gemischbildung der Verbrennungskraftmaschine steuerbar ist. Solche Systeme für eine Reduzierung der Schadstoffkomponenten eines Abgases sind auch als sogenannte Drei-Wege-Katalysatoren für Kraftfahrzeuge bekannt.

Nonnenmann berichtet in seinem Artikel "Metallträger für Abgaskatalysatoren in Kraftfahrzeugen" MTZ Motortechnische Zeitschrift, 45. Jahrgang Nr. 12/1984, daß auch Metallkatalysatoren existierten, die aus katalytisch wirksamen Metallblechen, z.B. Monel hergestellt waren, die sich jedoch nicht durchsetzen konnten.

Metallkatalysatoren, die eine katalytisch aktive Oberfläche aufweisen, gehen aus einer Mehrzahl von Dokumenten hervor. So geht beispielsweise aus der US 5,234,882 ein Katalysator mit einer Metallwabenstzuktur hervor, die mit einer Oxid bildenden Schicht versehen wird. Nach dem Oxidieren wird dann ein katalytisch aktives Material aufgebracht. Die Oxidschicht wird vorzugsweise aus Aluminium aufgebaut Als weitere Metalle sind Cer, Thorium, Yttrium und Zirkonium genannt. Die erhaltenen Monolithstrukturen, die eine oberflächliche Metalloxidschicht aufweisen, werden sodann mit konventionellen katalytisch aktiven Metallen wie Edelmetallen, beispielsweise Platin, Palladium, Rhodium, Iridium, Gold oder Silber beschichtet.

Aus der DE 4416469 geht ein vollmetallischer Oxidationskatalysator umfassend Nickel, Mangan, Chrom und Eisen hervor. Der Katalysator kann in Draht- oder Blechform eingesetzt werden. Vorzugsweise wird er in Form von Drahtgestricken eingesetzt. Der Katalysator wird dabei oberflächlich anoxidiert und nachfolgend gegebenenfalls reduziert.

Derwent Abstract AN 93-247767 betrifft einen Stahl für einen Katalysator, der zur Entfernung von Stickoxiden dient. Dabei wird ein Stahlsubstrat mit einer Vanadium und Titan enthaltenden Legierung beschichtet, die sodann oxidiert wird. Es wird angegeben, dass das Stahlsubstrat in Form eines Rohres, einer Stange oder einer Platte vorliegen kann. Der Katalysator wird nicht im Zusammenhang mit einer Verbrennungskraftmaschine eingesetzt. Es wird insbesondere auf eine Diffusion und Penetration der Legierung in das Stahlsubstrat abgestellt. Der Katalysator wird zur Entfernung von Stickoxiden aus thermischen Energieerzeugungsboilern, Sinteröfen, Glasschmelzöfen oder Koksöfen eingesetzt.

Aus der DE 195 36 752 geht ein Verfahren und eine Vonichtung zum Herstellen eines Wabenkörpers aus wärmebehandelten 2- oder mehrschichtigen Metallfolien hervor. Mit Aluminium walzplattierte Stahlfolien werden vor einer Umformung in Wabenkörper durch in der Folie erzeugte ohmsche Wärme behandelt Bei einer Wärmebehandlung in Sauerstoffatmosphäre kommt es zu einer Oxidation. Auf die Bildung katalytisch aktiver Oxidationsschichten wird nicht eingegangen.

Auch im Bereich von Kleinmotoren, wie z.b. bei Rasenmähern, Ketteosägen, Kleinkrafträdern oder desgleichen, besteht die Bestrebung Abgaskomponenten solcher Verbrennungskraftmaschinen mittels katalytisch wirksamer Strukturen zu reduzieren. Solche Verbrennungskraftmaschinen weisen jedoch keine Motorsteuerung sowie keine Lambda-Sonde im Abgasstrang auf, so daß eine Steuerung der Gemischbildung mit der Zielsetzung einer möglichst geringen Schadstoffbildung nicht möglich ist.

Die Kleinmotoren arbeiten mit einem fetten Gemisch, d. h. mit einem Überangebot an Brennstoff. Bei solchen Verbrennungskraftmaschinen besteht das Problem, daß eine große Menge an unverbrannten Kohlenwasserstoffen in eine katalytisch wirksame Struktur gelangt und dort verbrennt. Hierbei entsteht die Gefahr sogenannter "Hot Spot" Bildung, die zu einer Zerstörung der katalytisch wirksamen Oberfläche fuhren kann. Insbesondere besteht die Gefahr, daß bei der Verwendung einer katalytisch wirksamen Struktur, die einen Wash-coat aufweist, eine Verglasung des Wash-coats" stattfindet, so daß die katalytisch wirksame Struktur lediglich eine geringe Lebenszeit erreichen kann.

Hiervon ausgehend liegt der vorliegenden Erfindung die Zielsetzung zugrunde, eine katalytisch wirksame Struktur anzugeben, welche auch für eine Verbrennungskraftmaschine geeignet ist, die keine Steuerung zur Gemischbildung aufweist.

Diese Aufgabe wird erfindungsgemäß durch eine Struktur mit den Merkmalen des Anspruchs 1 gelöst. Eine vorteilhafte Weiterbildung ist Gegenstand des abhängigen Anspruchs.

Die erfindungsgemäße Struktur, welche wabenförmig ausgebildet ist, ist durch wenigstens eine Blechlage gebildet, die wenigstens eine katalytisch wirksame Oberfläche aufweist. Die Oberfläche der Blechlage ist wenigstens partiell mit einer katalytisch wirksamen Metalloxidschicht versehen. Die spezifische Aktivität der Metalloxidschicht ist dabei geringer, als die spezifische Aktivität der katalytisch wirkenden Metalle ausgewählt aus der Gruppe der Edelmetalle, wie sie bei Drei-Wege-Katalysatoren verwendet werden. Eine solche katalytisch wirksame Struktur ist insbesondere geeignet für Verbrennungskraftmaschinen, die keine Steuerung für eine Gemischbildung aufweist, da aus dem Überangebot an Brennstoff nur ein Teil katalytisch an der Oberfläche der Metalloxidschicht, umgesetzt wird und somit eine Ausbildung von sogenannten "Hot Spots" vermieden werden kann.

Die Metalloxidschicht ist unmittelbar auf der Blechlage ausgebildet, so daß auf ein Aufbringen eine Trägerschicht in Form eines "Wash-coats" verzichtet werden kann, wodurch die Herstellung einer solchen Struktur vereinfacht wird.

Betreffend die Struktur wird auch vorgeschlagen, daß das Metall der Metalloxidschicht eine Werkstoffkomponente des Werkstoffes der Blechlage ist. Der Vorteil dieser Ausgestaltung ist, daß das Metall der Metalloxidschicht in dem Werkstoff der Blechlage integriert ist und daher eine hohe Haftung der Metalloxidschicht mit der Blechlage gegeben ist. Die Ausbildung der Metalloxidschicht kann durch thermische Behandlung der Blechlage in einer oxidierenden Atmosphäre erfolgen.

Die Metalloxidschicht ist durch Oxidation einer auf die Blechlage aufgebrachten Metallschicht gebildet . Die Metallschicht kann beispielsweise durch Walzplattieren auf die Blechlage aufgebracht werden. Die Metallschicht kann durch Eintauchen des Grundstoffes in ein flüssiges Metall auf die Blechlage aufgebracht werden. Alternativ kann die Metallschicht durch Aufsprühen auf die Blechlage aufgebracht werden. Hierbei kann das die Metallschicht bildende Metall flüssig oder als Staub aufgesprüht werden. In Abhängigkeit davon, welches Metall die Metallschicht bildet, kann die Metallschicht auch durch elektrolytische Abscheidung gebildet werden.

Es ist nicht zwingend notwendig, daß die Metallschicht vollflächig auf die Blechlage aufgebracht wird. Die Metallschicht kann auch bereichsweise auf der Blechlage aufgebracht sein. Die Metalloxidschicht wird durch Oxidation der auf die Blechlage aufgebrachten Metallschicht gebildet.

Die Metalloxidschicht kann auch unmittelbar auf die Blechlage aufgebracht werden, so daß nach dem Aufbringen der Metalloxidschicht auf die Blechlage eine katalytische Wirksamkeit der Blechlage bereits besteht.

Nach der erfindungsgemäßen Struktur wird vorgeschlagen, daß das Metalloxid ein Oxid eines Metalls der 4. Periode ist Insbesondere ist das Metalloxid ein Oxid eines Übergangsmetalls. Bevorzugt ist das Metalloxid ein Oxid eines Metalls ausgewählt aus der Gruppe Ti, V, Zn, Fe, Cr, Mn, Ni, Cu, Co. Vorzugsweise wird vorgeschlagen, daß das Metalloxid ein Titanoxid ist, welches eine relativ hohe katalytische Aktivität im Vergleich zu den weiteren Oxiden der vorgeschlagenen Gruppe der Metalle hat. Vorzugsweise ist die Blechlage als solche aus einem Werkstoff gebildet, der Titan als Legierungsbestandteil enthält. Der Werkstoff der Blechlage kann ferner Eisen, Chrom und Nickel als Legierungskomponenten enthalten.

Vorzugsweise ist das Metalloxid durch ein Zinkoxid gebildet, welches auf einem korrosionsbeständigen Grundwerkstoff ausgebildet ist. Die katalytische Aktivität von Zinkoxid ist bei Oxidationsreaktionen vergleichsweise hoch. Sie ist höher als diejenige von Eisenoxid oder Chromoxid. Die Zinkschicht als Metallschicht kann durch Eintauchen der Blechlage in flüssiges Zinkschicht, auch durch Aufsprühen von Zink (flüssig oder als Staub) oder auch durch elektrolytischen Abschiedung aus einer Zink-Salz-Lösung aufgebracht werden.

Gemäß einer weiteren vorteilhaften Ausgestaltung der Struktur wird vorgeschlagen, daß das Metall der Metalloxidschicht ein höheres Oxidationspotential aufweist, als Werkstonkomponenten der Blechlage. Hierdurch wird erreicht, daß primär eine katalytisch wirksame Metalloxidschicht ausgebildet wird. Vorzugsweise bildet das Metall keine stabile Passivierschicht bei den während der Verwendung der katalytischen Struktur herrschenden Temperaturen.

Nach einer weiteren vorteilhaften Ausgestaltung der Struktur wir vorgeschlagen, daß das Metall des Metalloxids bzw das Metalloxid höchstens eine geringe Diffusionsfähigkeit in die Blechlage aufweist. Hierdurch wird vermieden, daß das Metall vor der Ausbildung des Metalloxids bzw das Metalloxid in die Blechlage hinein diffundiert, so daß keine katalytisch wirksame Metalloxidschicht auf der Blechlage verbleibt. Die geringe Diffusion muß insbesondere auch bei höheren Temperaturen gewährt bleiben.

Um zu vermeiden, daß die Wirksamkeit der katalytischen Metalloxidschicht auch durch die Diffusion von Werkstoffkomponenten der Blechlage in die Metalloxidschicht nicht oder nur in einem sehr geringen Maße beeinträchtigt wird, wird vorgeschlagen, daß die Struktur so ausgebildet ist, daß die Diffusion einer jeden Werkstoffkomponente der Blechlage in das Metall der Metalloxidschicht bzw. in die Metalloxidschicht höchstens gering ist. Hierdurch wird eine Anreicherung der Metalloxidschicht mit Werkstoffkomponenten der Blechlage vermieden.

Weitere Einzelheiten und Vorteile der erfindungsgemäßen Struktur werden anhand der in der Zeichnung dargestellten Ausführungsbeispiele erläutert. Es zeigen:
- Figur 1: schematisch eine Struktur 1,
- Figur 2: schematisch eine Blechlage mit einer Metalloxidschicht,
- Figur 3: ein erstes Ausfuhrungsbeispiel eine Vorrichtung, zur Bildung einer Blechlage mit einer Metalloxidschicht,
- Figur 4: ein zweites Ausführungsbeispiel einer Vorrichtung zur Bildung einer Blechlage mit einer Metalloxidschicht und
- Figur 5: schematisch ein drittes Ausführungsbeispiel einer Vorrichtung zur Ausbildung eine Blechlage mit einer Metalloxidschicht.

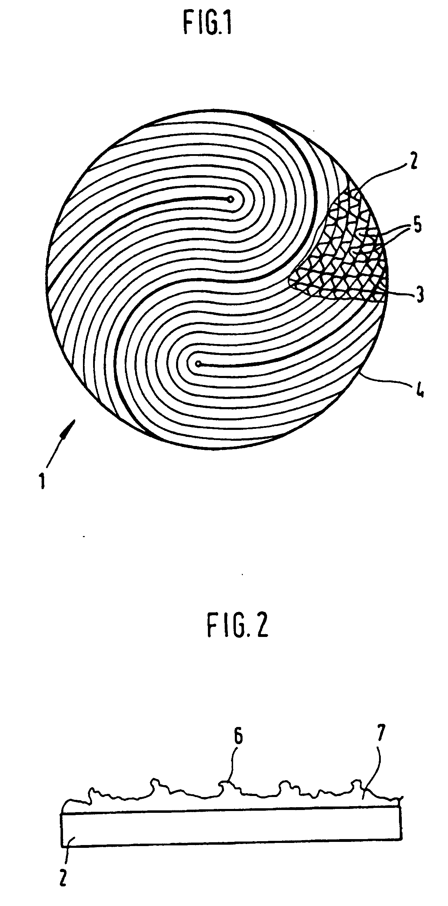

In Figur 1 ist schematisch und beispielhaft eine Struktur 1 dargestellt. Die Struktur 1 ist im wesentlichen wabenförmig ausgebildet. Sie ist durch gewellte Blechlagen 2 sowie glatte Blechlagen 3 gebildet. Die gewellten Blechlagen 2 und die glatten Blechlagen 3 sind geschichtet und ,s'-förmig miteinander verschlungen. Die gewellten Blechlagen 2 sowie die glatten Blechlagen 3 begrenzen Kanäle, die von einem Abgas einer Verbrennungskraftmaschine durchströmbar sind. Die gewellten Blechlagen 2 sowie die glatten Blechlagen 3 sind in einem Mantelrohr 4 angeordnet.

Die Struktur 1, wie sie beispielhaft in der Figur 1 dargestellt ist, ist so ausgebildet, daß sie katalytisch wirksam ist. Wird ein Abgas einer Verbrennungskraftmaschine durch die Struktur 1 durchgeführt, so findet eine Reduktion und/oder eine Oxidation der Komponenten des Abgases einer Verbrennungskraftmaschine statt. Figur 2 zeigt vergrößert und schematisch eine Blechlage 2, die aus einer Metallfolie gebildet ist. Die Blechlage 2 weist eine katalytisch wirksame Oberfläche 6 auf. Die katalytisch wirksame Oberfläche 6 der Blechlage 2 ist durch eine Metalloxidschicht 7 gebildet. Die gesamte Oberfläche der Blechlage kann mit einer Metalloxidschicht 7 versehen sein. Sowohl gewellte Blechlagen 2 als auch glatte Blechlagen 3 können mit einer Metalloxidschicht versehen sein. Bei der Metalloxidschicht 7 handelt es sich um eine Oxidschicht, die durch Oxidation eines unedlen Metalls gebildet ist.

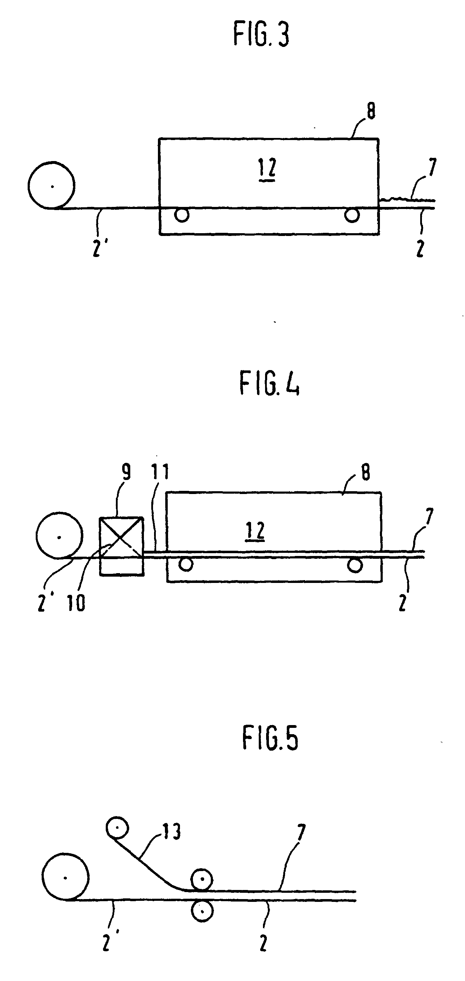

Zur Herstellung einer Blechlage 2 mit einer Metalloxidschicht 7 wird entsprechend der Figur 3 vorgeschlagen, daß eine oxidfreie Blechlage 2' kontinuierlich durch eine Oxidationseinrichtung 8 hindurchgeführt wird. Die Oxidationseinrichtung 8 weist eine Kammer 12 auf, in der eine zur Ausbildung einer Metalloxidschicht geeignete Atmosphäre herrscht. Die Oxidationseinrichtung 8 weist ferner nicht dargestellte Heizer auf, durch die in der Kammer 12 eine Temperatur eingestellt wird, die zur Ausbildung der Metalloxidschicht 7 geeignet ist. Vorzugsweise wird die Blechlage 2' in der Oxidationseinrichtung 8 auf eine Temperatur von wenigstens 350 °C erhitzt und für eine vorbestimmte Zeit auf der Oxidationstemperatur gehalten. Die Oxidationstemperatur und die Oxidationszeit ist im wesentlichen abhängig von dem Werkstoff der Blechlage 2' und der Oxidationsatmosphäre in der Kammer 12. Entsprechend der gewünschten Ausbildung der Metalloxidschicht 7 können einzelne Parameter so eingestellt werden, daß die gewünschte Metalloxidschicht 7 auf der Blechlage 2 ausgebildet wird.

Die Metalloxidschicht 7 ist bei der Blechlage 2 nach Figur 3 durch die Oxidation eines Metalls, welches eine Werkstoffkomponente des Werkstoffes der Blechlage 2' ist, erzeugt worden. Das Metall der Metalloxidschicht weist hierbei vorzugsweise ein höheres Oxidationspotential auf, als weitere Werkstoffkomponenten der Blechlage 2. Vorzugsweise erfolgt die Oxidation der Blechlage 2' derart, daß die Blechlage 2' nicht vollständig an dem Metall, welches die Metalloxidschicht bildet, verarmt.

Die Metallegierung der Blechlage 2' sollte auch so gewählt sein, daß das Metall der Metalloxidschicht bzw. das Metalloxid eine höchstens geringe Diffusion in die Blechlage aufweist. Hierdurch wird sichergestellt, daß eine Metalloxidschicht 7 tatsächlich ausgebildet wird. Um eine möglichst hohe Wirkung der Metalloxidschicht 7 zu erreichen ist es auch vorteilhaft, wenn die weiteren Werkstoffkomponenten der Blechlage 2' eine höchstens geringe Diffusionsgeschwindigkeit in die Metalloxidschicht haben. Der Oxidationsvorgang läuft daher schneller ab, als der Diffusionsvorgang einer Werkstoffkomponente in die Metalloxidschicht, so daß eine Mischoxidbildung verhindert wird. Vorzugsweise handelt es sich bei der Metalloxidschicht um eine Oxidschicht, die durch Metalloxide, insbesondere TiO₂, V₂O₅, ZnO, Fe₂O₃, Cr₂O₃, MnO₂, NiO, CuO und/oder Co₃O₄ gebildet ist. Bevorzugt ist jedoch die Ausbildung einer Metalloxidschicht aus Titanoxid.

Statt eines kontinuierlichen Oxidationsvorgangs der Blechlage 2' kann auch eine diskontinuierliche Oxidation wenigstens einer Blechlage 2' erfolgen. Aus Wirtschaftlichkeitsgründen ist jedoch ein kontinuierlicher Herstellungsvorgang zweckmäßig.

Figur 4 zeigt schematisch ein zweites Ausführungsbeispiel einer Vorrichtung zur Bildung einer Blechlage 2 mit einer Metalloxidschicht 7. Die Vorrichtung umfaßt eine Beschichtungseinheit 9. Durch die Beschichtungseinheit 9 wird ein Metall 10 Blechlage 2, bei der es sich um eine Metallfolie handeln kann, aufgebracht. Das Metall 10 bildet eine Metallschicht 11 auf der Blechlage 2'. Die so vorbereitete Blechlage 2' wird einer Oxidationseinrichtung 8 zugeführt. In der Oxidationseinrichtung 8, die eine Kammer 12 aufweist, findet eine Oxidation der Metallschicht 11 statt. Die oxidierte Metallschicht 11 bildet eine Metalloxidschicht 7 im Sinne der Erfindung. In der Kammer 12 herrscht eine Oxidationsatmosphäre. Die Oxidationseinrichtung 8 weist ferner nicht dargestellte Heizeinrichtungen auf, durch die die Blechlage mit der Metallschicht 11 erhitzt wird. Neben der Oxidation der Metallschicht 11 findet auch eine Verbindung des Metalls bzw. der Metalloxide der Metalloxidschicht 7 mit der Blechlage 2 statt.

Die Aufbringung des Metalls 10 auf die Blechlage 2' kann auf physikalischem oder chemischem Wege erfolgen. Je nach Verfahrensführung der Beschichtung der Blechlage 2' kann auf eine zusätzliche Oxidation in einer gesonderten Oxidationseinrichtung 8 verzichtet werden, wenn das Metall 10 in einer Oxidationsatmosphäre auf die Blechlage 2' aufgebracht wird. Die Aufbringung des Metalls kann beispielsweise durch Aufsprühen eines flüssigen Metalls in eine Oxidationsatmosphäre stattfinden.

Durch die Beschichtungseinheit 9 kann die Blechlage 2' in ausgewählten Bereichen mit einem Metall versehen sein. Es ist auch möglich, eine Blechlage 2 mit einer Metalloxidschicht 7 auszubilden, wobei die Metalloxidschicht 7 unterschiedliche Metalloxide aufweist oder Bereiche hat, die sich unterscheidende Metalloxide enthalten.

Figur 5 zeigt schematisch ein weiteres Ausführungsbeispiel einer Herstellungsmöglichkeit einer Blechlage 2 mit einer Metalloxidschicht 7. Die Blechlage 2 mir einer Metalloxidschicht 7 ist durch Walzplattierung einer Blechlage 2' mit einer Metalloxidfolie 13 gebildet. Gegebenenfalls kann die so ausgebildete Blechlage 2 mit einer Metalloxidschicht 7 weiteren Behandlungsschritten unterzogen werden, insbesondere einer Wärmebehandlung, durch die eine dauerhafte Verbindung zwischen der Metalloxidschicht 7 und der Blechlage 2 gebildet wird.

Die Blechlage 2 bzw. 2' ist vorzugsweise durch eine Metallfolie mit einer Dicke von ca. 8 µm gebildet. Die Metallfolie ist insbesondere eine Titanfolie mit stabilisierenden Zusätzen von Eisen, Chrom und Vanadium. Eine solche Titanfolie weist eine sehr gute Verformbarkeit auf, so daß diese insbesondere zur Ausbildung strukturierter Blechlagen verwendbar ist.

Alternativ besteht auch die Möglichkeit eine Blechlage mit einer Metalloxidschicht auszubilden, dadurch das eine korrosionsbeständige, aluminiumfreie, Metallfolie verzinkt wird und in einer Oxidationsatmosphäre oxidiert wird.

### Bezugszeichenliste

- 1: Struktur
- 2: gewelltes Blech
- 3: glattes Blech
- 4: Mantelrohr
- 5: Kanal
- 6: Oberfläche
- 7: Metalloxidschicht
- 8: Oxidationseinrichtung
- 9: Beschichtungseinheit
- 10: Metall
- 11: Metallschicht
- 12: Kammer
- 13: Metalloxidfolie

## Patentansprüche

1. Von einem Abgas einer Verbrennungskraftmaschine durchströmbare, katalytisch wirksame durch wenigstens eine Blechlage (2, 3) gebildete wabenförmige Struktur (1), wobei die Blechlage (2, 3) eine katalytisch wirksame Oberfläche (6) aufweist, die wenigstens partiell mit einer katalytisch wirksamen Metalloxidschicht (7) versehen ist, welche durch Oxidation einer auf eine Blechlage (2') aufgebrachten Metallschicht (10) gebildet ist, **dadurch gekennzeichnet, daß** das Metalloxid ein Oxid eines Metalls der vierten Periode ist, ausgewählt aus der Gruppe Ti, V, Zn, Fe, Cr, Mn, Ni, Cu, Co.

2. Struktur nach Anspruch 1, **dadurch gekennzeichnet, daß** das Metall der Metalloxidschicht (7) ein höheres Oxidationspotential aufweist als Werkstoffkomponenten der Blechlage (2').

## Claims

1. Honeycomb structure through which an exhaust gas of an internal combustion engine can flow and which is catalytically active by means of at least one metal sheet (2, 3), wherein the metal sheet (2, 3) has a catalytically active surface (6) which is at least partially provided with a catalytically active metal oxide layer (7), which is formed by oxidation of a metal layer (10) applied to a metal sheet (2'), **characterised in that** the metal oxide is an oxide of a metal of the fourth period, selected from the group Ti, V, Zn, Fe, Cr, Mn, Ni, Cu, Co.

2. Structure according to claim 1, **characterised in that** the metal of the metal oxide layer (7) has a higher oxidation potential than constituents of the metal sheet (2').

## Revendications

1. Structure en forme de nids d'abeilles (1) pouvant être parcourue par un gaz d'échappement d'une machine à combustion interne, à effet catalytique et formée par au moins une couche de tôle (2, 3), dans quel cas la couche de tôle (2, 3) a une surface à effet catalytique (6) qui est pourvue au moins partiellement d'une couche d'oxyde métallique (7) à effet catalytique qui est formée par l'oxydation d'une couche métallique (10) rapportée sur une couche de tôle (2'), **caractérisée en ce que** l'oxyde métallique est un oxyde d'un métal de la quatrième période, choisi parmi le groupe Ti, V, Zn, Fe, Cr, Mn, Ni, Cu, Co.

2. Structure selon la revendication 1, **caractérisée en ce que** le métal de la couche d'oxyde métallique (7) a un potentiel plus élevé d'oxydation que des composantes de matériau de la couche de tôle (2').
